## Europäisches Patentamt

## European Patent Office

## Office européen des brevets

(19)

(11) Numéro de publication: **0 148 071**
**B1**

(12)

# FASCICULE DE BREVET EUROPEEN

(45) Date de publication du fascicule du brevet:
22.06.88

(51) Int. Cl.⁴: **H 04 N 3/233**

(21) Numéro de dépôt: **84402631.0**

(22) Date de dépôt: **18.12.84**

(54) **Circuit de balayage horizontal à récupération et caméra de télévision comportant un tel circuit.**

(30) Priorité: **23.12.83 FR 8320677**

(43) Date de publication de la demande:
**10.07.85 Bulletin 85/28**

(45) Mention de la délivrance du brevet:
**22.06.88 Bulletin 88/25**

(84) Etats contractants désignés:
**DE GB**

(56) Documents cités:
**FR - A - 1 533 961**
**FR - A - 2 217 885**
**FR - A - 2 447 123**

(73) Titulaire: **THOMSON-CSF, 173, Boulevard Haussmann, F-75379 Paris Cédex 08 (FR)**

(72) Inventeur: **Zanier, Edouard, THOMSON-CSF SCPI bld Haussmann, F-75379 Paris Cedex 08 (FR)**

(74) Mandataire: **Turlèque, Clotilde et al, THOMSON-CSF SCPI 19, avenue de Messine, F-75008 Paris (FR)**

## Description

L'invention se rapporte à un circuit de balayage horizontal du type dit «à récupération» et à une caméra de télévision comportant un tel circuit.

Il existe différents types de circuits de balayage horizontal utilisables dans les caméras de télévision. Certains sont très perfectionnés et permettent de superposer des signaux de correction de géométrie au signal de balayage horizontal appliqué à la bobine du déflecteur. Ces circuits comportent généralement des amplificateurs en classe A ou AB, à grande dynamique de tension, auxquels sont associées des boucles de contre-réaction mesurant le courant qui traverse la bobine de déflexion. Les amplificateurs classe B ne sont pas utilisables en raison de la distorsion de raccordement au point milieu de leur caractéristique, qui se traduit par une distorsion en milieu de ligne.

En raison de la tension d'alimentation élevée et du courant de repos nécessaire au fonctionnement des amplificateurs classe A ou AB, par exemple 10 mA sous 150 V, ces circuits ne sont pas utilisables dans des caméras de reportage qui ne disposent que d'une réserve d'énergie limitée (12 W par exemple).

Les circuits de balayage horizontal du type dite «à récupération», ou «fly back» ou encore «switch» suivant la terminologie anglo-saxonne, présentent au contraire un bon rendement et sont particulièrement bien adaptés aux caméras de reportage à réserve d'énergie limitée. Par contre ce type de circuit est actuellement inadapté à l'introduction de signaux de correction de géométrie dans une large bande de fréquences. En effet, ces circuits utilisent une source d'alimentation constituée d'un générateur de signal, corrigé en linéarité, appliqué à la bobine du déflecteur par l'intermédiaire d'un transformateur réalisant l'adaptation entre la source d'alimentation et la bobine. Le courant agumente dans la bobine du déflecteur pendant une demi-période de ligne; un interrupteur permet d'ouvrir le circuit; le courant décroît alors rapidement et s'inverse pendant la durée du retour ligne par auto-oscillation; l'énergie emmagasinée dans la bobine erst alors restituée pendant la demi-période suivante en sens inverse, le circuit étant refermé par une diode alors conductrice.

Du fait du principe utilisé, un signal de correction de géométrie non symétrique, destiné à corriger par exemple un défaut de centrage, se traduit par une modification de l'amplitude du courant de balayage qui en corrigeant le défaut dans un sens l'augmente dans l'autre.

Pour réaliser quand même une correction dans un tel circuit de balayage, il est possible d'injecter des courants de correction de géométrie en série avec le déflecteur par l'intermédiaire d'un amplificateur à très basse impédance classe A. Pour cela les signaux de correction, en tension, sont différentiés préalablement pour compenser l'intégration due à l'inductance du déflecteur. Le défaut d'un tel circuit est que l'étage d'injection des courants de correction, est traversé par le courant de balayage et doit être conçu pour admettre un tel courant; ce qui tend à diminuer considérablement le rendement escompté d'un circuit de balayage à récupération.

L'invention a donc pour objet un circuit de balayage horizontal, du type dit «à récupération» comportant un circuit particulier d'injection des courants de correction de géométrie, qui ne présente pas les inconvénients des circuits d'injection décrits ci-dessus pour ce type de circuits de balayage et qui en particulier permet de conserver un bon rendement.

Suivant l'invention, un circuit de balayage horizontal à récupération, pour caméra de télévision, comportant une source de tension de balayage couplée à un première borne de la bobine du déflecteur du circuit de balayage, un interrupteur commandé par des impulsions à la fréquence ligne, pour inverser le sens du courant dans la bobine, associé à une diode de récupération, est caractérisé en ce que les composantes continue et à très basses fréquences d'un signal de correction de géométrie du balayage sont appliquées directement à la bobine du déflecteur par une première voie d'injection comportant un générateur de courant, un condensateur reliant la seconde borne de la bobine au point commun du montage, et en ce que les autres composantes du signal de correction sont superposées à la tension de balayage fournie par la source par une seconde voie d'injection après un traitement consistant à remplacer le signal de correction par sa composante moyenne pendant les intervalles de retour ligne et à différentier le signal ainsi traité pour compenser l'intégration ultérieure par le déflecteur.

L'invention a également pour objet une caméra de télévision utilisant un tel circuit de balayage.

L'invention sera mieux comprise et d'autres caractéristiques apparaîtront à l'aide de la description qui suit en référence aux figures annexées:

– la figure 1 illustre des exemples de défauts de géométrie à corriger;

– la figure 2 est un schéma synoptique du circuit de balayage horizontal suivant l'invention;

– la figure 3 représente des diagrammes de signaux générés dans ce circuit pour corriger les défauts donnés en exemple sur la figure 1;

– la figure 4 est un schéma détaillé d'un mode de réalisation du circuit suivant l'invention.

Pour résoudre le problème de l'injection de courants de correction de géométrie dans un circuit de balayage à récupération, le circuit suivant l'invention est tel que les composantes continues et à très basse fréquence du signal de correction de géométrie sont injectées en série dans l'inductance du déflecteur, le circuit du courant de balayage étant refermé par un condensateur, tandis que les autres composantes sont injectées au niveau de la source d'alimentation après un traitement particulier qui permet d'éviter toute modification non souhaitée de l'amplitude du courant de balayage, en particulier lorsque seule une variation localisée de centrage est souhaitée.

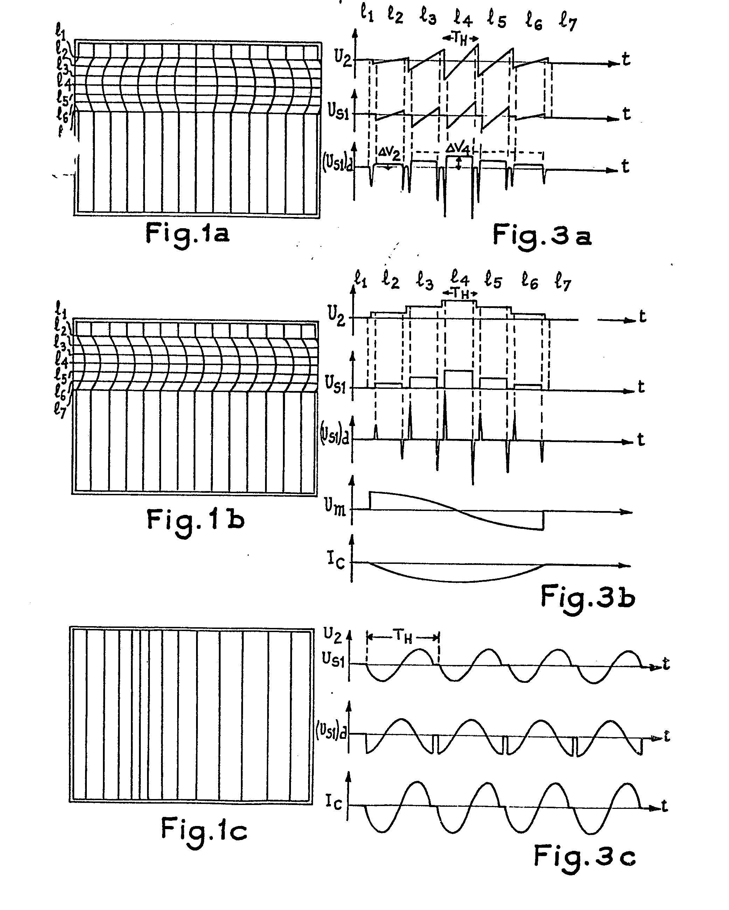

La figure 1 représente schématiquement trois exemples de défauts de géométrie dans un balayage horizontal d'image susceptibles d'être obtenus dans une caméra.

Le premier représenté sur la figure 1a est un défaut dans l'amplitude du courant de balayage sur un certain nombre de lignes $l_1$ à $l_7$ de l'image; ce défaut résulte d'une distorsion localisée d'amplitude.

Le second, représenté sur la figure 1b, est une variation dans le centrage des lignes $l_1$ à $l_7$, progressivement décalées vers la droite puis redevenant petit à petit centrées. Cette distorsion est dite en drapeau.

Enfin, le troisième défaut, représenté sur la figure 1c, résulte d'un distorsion de linéarité, les lignes verticales de la mire étant trop proches sur la partie gauche de l'image et au contraire trop espacées dans la partie droite de l'image.

Le circuit décrit en référence à la figure 2 permet d'introduire les corrections nécessaires sans les répercuter symétriquement lorsqu'il n'y a pas lieu.

Ce circuit de balayage comporte les éléments d'un circuit classique à récupération complétés par un circuit d'injection des courants de correction de géométrie particulier.

Le circuit de balayage à récupération proprement dit comporte une source 10 de tension de balayage, $U_1$, qui est une source d'alimentation continue, + V, à laquelle sont superposés des signaux dits de correction de linéarité à la fréquence ligne, en particulier un signal en dents de scie destiné à compenser le défaut qui est créé par la résistance interne de la bobine d'inductance du déflecteur. Cette source est reliée à une première entrée d'un amplificateur-additionneur 20 dont la sortie est reliée à la première borne du primaire d'un transformateur 30. Cet amplificateur 20 délivre la tension de balayage en basse impédance. La seconde borne du transformateur est reliée à la masse du montage par l'intermédiaire d'un interrupteur 50 commandé par des impulsions $U_3$ à la fréquence ligne, cet interrupteur étant ouvert pendant le retour ligne. Le déflecteur 40 est relié en parallèle sur le secondaire du transformateur 30. Le transformateur réalise l'adaptation entre la tension d'alimentation disponible et l'inductance du déflecteur. Une diode 60, dite de récupération, est placée en parallèle sur l'interrupteur 50 pour conduire le courant lorsque l'inductance restitue l'énergie emmagasinée, après le retour de balayage, pendant une demi-période de la ligne. Un condensateur d'accord 70 est placé en parallèle sur l'interrupteur 50 et sur la diode 60.

Le circuit d'injection des courants de correction associé à ce circuit de balayage comporte une première voie d'injection comportant un générateur de courant 1, recevant une tension de correction, $U_2$, dont la sortie est reliée à la borne du déflecteur reliée à la masse dans le circuit de balayage à récupération classique, cette borne étant reliée à la masse dans ce montage par l'intermédiaire d'un condensateur 2 dont l'impédance est négligeable à la fréquence de balayage. Ce condensateur permet de refermer le circuit du courant de balayage de la bobine du déflecteur 40 sans traverser le générateur d'injection de courant 1.

Ainsi, seuls le courant continu et les composantes très basse fréquence du signal de correction sont injectés directement dans le déflecteur par le générateur de courant. Le transformateur 30, en plus de sa fonction d'adaptation, permet d'éviter que le fonctionnement de l'étage de balayage ne soit affecté par les composantes continues et à très basse fréquence.

Les autres composantes du signal de correction sont appliquées au déflecteur par une seconde voie d'injection où elles sont traitées, le signal résultant de ce traitement est superposé à la tension d'alimentation de l'étage de balayage. Le traitement a pour objet d'éviter que l'amplitude du signal de balayage ne soit modifiée pour les fréquences voisines et inférieures à la fréquence de balayage. Pour cela, la tension de correction $U_2$ est appliquée à une seconde entrée de l'amplificateur additionneur 20, par l'intermédiaire d'une résistance 3 suivie d'un circuit différentiateur 4, seulement en dehors des intervalles de retour de balayage. Pendant ces intervalles, c'est la composante moyenne $U_{C1}$ du signal de correction qui est appliquée via le différentiateur 4 à la seconde entrée de l'amplificateur 20. Pour cela, la seconde voie d'injection comporte en outre, entre la résistance 3 et le différentiateur 4, la première voie d'un commutateur 5 (première entrée de signal – sortie), la seconde entrée de signal de ce commutateur étant reliée à la sortie d'un intégrateur 6 recevant la tension de correction $U_2$. Ce commutateur a une entrée de commande recevant des impulsions à la fréquence ligne de durée égale à la durée du retour ligne. Pour cela la sortie de l'interrupteur 50, qui fournit des impulsions à la fréquence ligne, est reliée à l'entrée d'un circuit de mise en forme 7 qui délivre les impulsions nécessaires.

_ Ainsi, le signal de correction est supprimé pendant le retour de balayage, la tension $U_{S1}$ à appliquer après différentiation $(U_{S1})_d$, à l'entrée de l'amplificateur 20 étant ramenée pendant cet intervalle à la valeur moyenne du signal de correction. Le signal de correction injecté dans l'étage de balayage par la source d'alimentation présente, après ce traitement une valeur moyenne nulle et n'affecte pas l'amplitude du courant de balayage, sauf dans les cas où la correction demandée est précisément un changement d'amplitude. Du fait que les composantes continues et à très basse fréquence sont injectées en courant, directement dans le déflecteur, l'amplitude des signaux après différentiation superposés à la tension de balayage est limitée.

La figure 3 représente des exemples de signaux dans ce circuit, correspondants aux trois types de défauts représentés sur la figure 1: le signal de correction $U_2$, le signal $U_{S1}$ à la sortie du commutateur 5 et le signal $U_{S1}$ différentié, $(U_{S1})_d$, superposé à la tension de balayage $U_1$ dans l'amplificateur 20.

Le signal de correction $U_2$ représenté sur la figure 3a et correspondant à une distorsion localisée d'amplitude (figure 1a) a une composante moyenne nulle sur chaque ligne puisque la distorsion est symétrique; $T_H$ est la période de ligne. Le signal de correction est ramené à zéro pendant les intervalles de suppression et le signal différentié $(U_{S1})_d$ présente du fait des fronts descendants générés par le retour à zéro de $U_{S1}$ une composante moyenne nulle. La tension d'alimentation $U_1$ de l'étage est augmentée à chaque ligne d'une valeur constante $\triangle V_i$, $i = 1$ à 7; il en résulte une augmentation d'amplitude du courant de balayage sans variation de centrage, le courant résultant de l'intégration du signal $(U_{S1})_d$ par l'inductance du déflecteur étant nul puisque sa composante moyenne est nulle.

Le signal de correction $U_2$ (représenté sur la figure 3b, pour la correction d'une distorson en drapeau (figure 1b) (variation de centrage) a une composante moyenne non nulle sur chaque ligne puisque la distorsion n'est pas symétrique. Ce signal de correction est ramené à sa valeur moyenne pendant les retours ligne et le signal différentié $(U_{S1})_d$ présente, du fait des fronts alternativement montants et descendants, des impulsions de signes alternés et d'amplitudes différentes, le signal $(U_{S1})_d$ étant nul ailleurs. En conséquence, il n'y a pas de variation d'amplitude du courant de balayage et seulement une variation de centrage, la composante moyenne $U_m$ du signal $(U_{S1})_d$ superposée à la tension de balayage $U_1$ conduisant pour intégration dans le déflecteur à un courant de correction $I_c$, superposé au courant de balayage, qui augmente pour les lignes $I_1$ à $I_4$ puis diminue progressivement pour les lignes $I_4$ à $I_7$.

Le signal de correction $U_2$ représenté sur la figure 3c pour la correction d'une distorsion de linéarité (figure 1c), est un signal quasi-sinusoïdal identique sur toutes les lignes dont l'objet est de diminuer puis d'augmenter le courant dans le déflecteur sur une même ligne. Le signal $U_{S1}$ est semblable au signal $U_2$ et l'intégration du signal différentié $(U_{S1})_d$ donne un courant de correction $I_c$ superposé au courant de balayage, de même allure que le signal de correction lui-même. La composante moyenne du signal différentié $(U_{S1})_d$ sur une période de balayage étant nulle, la tension moyenne d'alimentation et donc l'amplitude crête du courant de balayage n'est pas affectée.

En pratique, plusieurs défauts de types différents peuvent exister simultanément. Dans ce cas le circuit de détection de défaut placé en amont du circuit de balayage horizontal fournit une tension de correction $U_2$ qui est une composition des différents signaux élémentaires décrits ci-dessus.

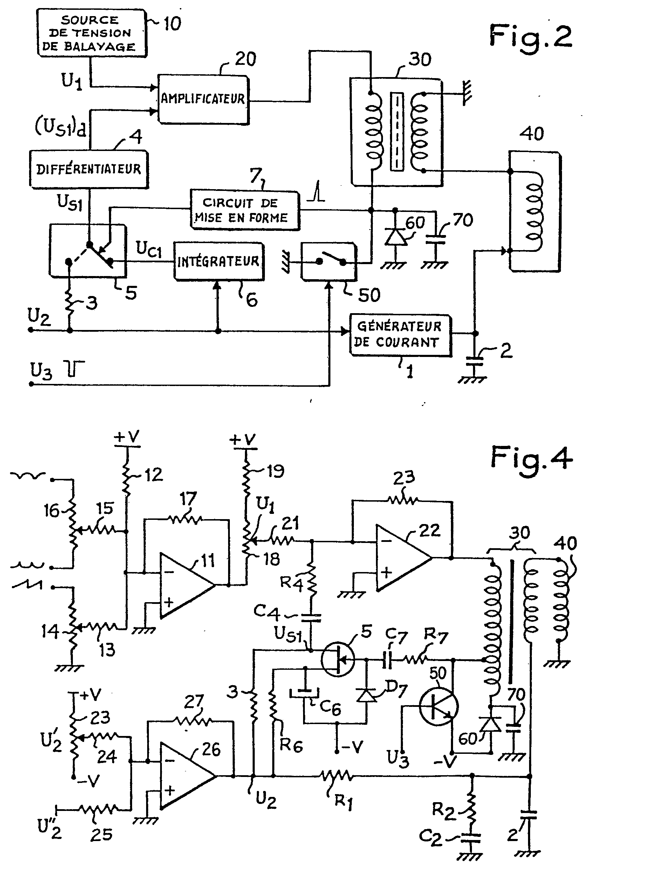

La figure 4 représente un mode de réalisation détaillé du circuit de balayage représenté sur la figure 2. Pour simplifier la figure, les tensions de polarisation des amplificateurs n'ont pas été représentées.

La source de tension de balayage comporte un amplificateur opérationnel 11 monté en additionneur dont l'entrée «+» est à la masse, l'entrée «−» recevant la tension continue +V par l'intermédiaire d'une résistance 12, une tension de correction de linéarité en dents de scie par l'intermédiaire d'une résistance 13 et d'un potentiomètre 14, et des tensions de correction pour les non-linéarités dites en «S» (dues au tube ou au déflecteur) par l'intermédiaire d'une résistance 15 et d'un potentiomètre 16, la sortie de cet amplificateur étant également reliée à son entrée «−» par l'intermédiaire d'une résistance 17. La sortie de cet amplificateur est reliée à un potentiomètre 18, reliée à la source de tension +V par une résistance 19. La tension $U_1$ d'alimentation de l'étage de balayage est prélevée sur le curseur du potentiomètre 18 et est délivrée en basse impédance par l'amplificateur 20 comportant une résistance d'entrée 21, un amplificateur opérationnel 22 monté en additionneur dont la sortie est rebouclée sur l'entrée «−» par une résistance 23, l'entrée «+» étant à la masse. L'entrée «−» reçoit également par un circuit différentiateur 4, constitué d'une capacité $C_4$ et d'une résistance $R_4$ en série, la tension de correction après traitement $U_{S1}'$ et différentiation $(U_{S1})_d$. La tension de correction $U_2$ est formée d'une valeur de correction de centrage $U'_2$ réglée par un potentiomètre 23 et de la tension de correction $U''_2$ issue d'un circuit de détection de défaut. Ces tensions sont appliquées par l'intermédiaire de deux résistances 24 et 25 à l'entrée «−» d'un amplificateur 26 monté en additionneur, sa sortie étant reliée à son entrée par une résistance 27 et son entrée «+» étant à la masse. Ainsi le signal de correction $U_2$ est délivré en basse impédance par l'amplificateur. La composante continue et les composantes à très basse fréquence du signal de correction sont injectées en courant dans la bobine 40 du déflecteur via une résistance série $R_1$ qui constitue le générateur de courant 1 de la figure 2. Le condensateur 2 qui referme le circuit secondaire du transformateur 30 pour le courant de balayage, forme avec l'inductance du déflecteur un circuit accordé qu'il est nécessaire d'amortir. Pour cela il est prévu un réseau à résistance $R_2$ et capacité $C_2$ en parallèle sur le condensateur 2 pour linéariser la caractéristique d'injection des composantes à fréquences très basses. L'interrupteur 50 de la figure 2 est dans ce mode de réalisation un transistor sur la base duquel sont appliquées les impulsions de commande de retour de balayage, l'émetteur est au potentiel −V et le collecteur relié à l'entrée du circuit de mise en forme 7 constitué d'une résistance $R_7$ et d'un condensateur $C_7$ en série, et d'une diode $D_7$.

Le circuit de commutation 5 est un transistor à effet de champ dont la grille est reliée au point commun à $D_7$ et $C_7$, dont la source est reliée au point de potentiel $U_2$ via l'intégrateur 6 constitué de la résistance $R_6$ et d'un condensateur $C_6$ relié au potentiel −V. Le drain du transistor 5 est relié à l'entrée du différentiateur 4, comme la résistance 3 qui permet d'appliquer le signal $U_2$ à l'entrée du différentiateur en dehors des impulsions de retour de balayage ligne. Le signal $U_{S1}$ apparaît donc sur le drain du transistor 5. La valeur de la capacité $C_4$ du différentiateur est déterminée en fonction de la valeur de l'inductance du déflecteur, et, avec la résistance $R_4$ limite le gain de l'étage et par conséquent la bande passante de l'ensemble et détermine donc la gamme de fréquences des composantes de correction passant par cette seconde voie d'injection.

Le mode de réalisation du circuit de balayage horizontal décrit en détails ci-dessus permet d'injecter des courants de correction de géométrie d'amplitude maximale 4% de l'amplitude du courant de balayage, à des fréquences comprises entre 0 et 125 KHz avec une linéarité suffisante pour être associé à un dispositif de correction automatique de géométrie.

L'invention n'est pas limitée aux modes de réalisation décrits en référence aux figures 1 et 2. Par exemple, le circuit de mise en forme, 7, peut être constitué par un circuit monostable déclenché par $U_3$ et fournissant une impulsion de durée égale à celle du retour de balayage.

Du fait de la faible consommation d'énergie nécessaire à ce circuit de balayage horizontal pour injecter les composantes de correction de géométrie, l'invention est particulièrement adaptée aux caméras de télévision ne disposant que d'une réserve d'énergie limitée, ce qui est le cas des caméras de reportage.

## Revendications

1. Circuit de balayage horizontal à récupération, pour caméra de télévision, comportant une source de tension de balayage (10) couplée à une première borne de la bobine du déflecteur (40) du circuit de balayage, un interrupteur (50) commandé par des impulsions à la fréquence ligne, pour inverser le sens du courant dans la bobine, associé à une diode de récupération (60), caractérisé en ce que les composantes continue et à très basses fréquences d'un signal de correction de géométrie du balayage sont appliquées directement à la bobine du déflecteur par une première voie d'injection comportant un générateur de courant (1), un condensateur (2) reliant la seconde borne de la bobine au point commun du montage, et en ce que les autres composantes du signal de correction sont superposées à la tension de balayage fournie par la source (10) par une seconde voie d'injection après un traitement consistant à remplacer le signal de correction par sa composante moyenne pendant les intervalles de retour ligne et à différentier le signal ainsi traité pour compenser l'intégration ultérieure par le déflecteur.

2. Circuit selon la revendication 1, caractérisé en ce que la seconde voie d'injection comporte, pour réaliser le traitement, un intégrateur (6) recevant le signal de correction en tension, un interrupteur (5) commandé par des impulsions de retour ligne ayant ses entrées recevant le signal de correction en tension, et la composante continue de ce même signal issue de l'intégrateur (6), un circuit différentiateur (4) relié à la sortie du commutateur et un circuit additionneur (20) relié à la sortie de la source de tension à balayage (10) et à la sortie du circuit différentiateur (4).

3. Caméra de télévision comportant un circuit de balayage horizontal à récupération selon l'une des revendications précédentes.

## Patentansprüche

1. Horizontalablenkschaltung mit Rückgewinnung für eine Fernsehkamera, mit einer Ablenkspannungsquelle (10), die mit einer ersten Klemme der Wicklung des Ablenkteils (40) der Ablenkschaltung gekoppelt ist, mit einem mit der Zeilenfrequenz durch Impulse gesteuerten Unterbrecher (50), um die Stromrichtung in der Spule umzukehren, dem eine Rückgewinnungsdiode (60) zugeordnet ist, dadurch gekennzeichnet, dass die Gleichstromkomponente und die Niederfrequenzkomponenten eines Signals zur Korrektur der Ablenkgeometrie unmittelbar an die Ablenkwicklung angelegt sind, über einen ersten einen Stromgenerator (1) umfassenden Einspeiseweg, wobei ein Kondensator (2) die zweite Klemme der Wicklung mit dem gemeinsamen Schaltungspunkt verbindet, und dass die anderen Komponenten des Korrektursignals sich mit der Ablenkspannung überlagern, die von der Quelle (10) über einen zweiten Einspeiseweg geliefert wird, nach einer Verarbeitung, die darin besteht, das Korrektursignal durch seine Mittelkomponente während der Zeilenrücklaufintervalle zu ersetzen und das so verarbeitete Signal zu differenzieren, um die spätere Integration durch das Ablenkteil auszugleichen.

2. Schaltung nach Anspruch 1, dadurch gekennzeichnet, dass der zweite Einspeiseweg zur Durchführung der Verarbeitung umfasst: einen Integrator (6), der das Spannungskorrektursignal empfängt, einen Unterbrecher (5), der durch die Zeilenrücklaufimpulse gesteuert wird, wovon die Eingänge das Spannungskorrektursignal empfangen, sowie die Gleichstromkomponente desselben Signals, welche aus dem Integrator (6) stammt, eine Differenzierschaltung (4), die mit dem Umschalterausgang verbunden ist, sowie eine Addierschaltung (20), die mit dem Ausgang der Ablenkspannungsquelle (10) und mit dem Ausgang der Differenzierschaltung (4) verbunden ist.

3. Fernsehkamera mit einer Horizontalablenkschaltung mit Rückgewinnung nach einem der vorstehenden Ansprüche.

## Claims

1. A recuperating horizontal sweep circuit for a television camera comprising a sweep voltage supply (10) coupled with a first terminal of the coil of the deflector (40) of the sweep circuit, an interrupting switch (50) operated by the line frequency pulses in order to reverse the direction of the current in the said coil, associated with a recuperating diode (60), characterized in that continuous and very low frequency components of a correcting signal for the geometry of the sweep are directly applied to the coil of the deflector via first injection path comprising a current generator (1), a capacitor (2) connecting the second terminal of the coil with the common point of assembly, and in that the other components of the correcting signal are superposed on the sweep voltage from the supply (10) via a second injection path after processing involving replacement of the correcting signal by its average component during line return intervals during the line return intervals and in differentiating the so processed signal in order to compensate for the preceding integration by the deflector.

2. The circuit as claimed in claim 1 characterized in that the second injection path comprises, in order to implement processing, an integrator (6) receiving the voltage correction signal, an interrupting switch (5) operated by the line return pulses having its inputs arranged to receive the voltage correcting signal, and the continuous component of this same signal issuing from the integrator (6), a differentiating circuit (4) connected with the output of the switch and an adding circuit (20) connected with the output of the sweep voltage supply (10) and with the output of the differentiating circuit (4).

3. A television camera comprising a horizontal recuperating circuit as claimed in either of the preceding claims.

Fig.1a

Fig.1b

Fig.1c

Fig.3a

Fig.3b

Fig.3c

2/2

Fig.2

Fig.4